(19) Europäisches Patentamt / European Patent Office / Office européen des brevets

(11) **EP 2 428 770 B1**

(12) **EUROPEAN PATENT SPECIFICATION**

(45) Date of publication and mention
of the grant of the patent:
**24.04.2013  Bulletin 2013/17**

(51) Int Cl.:
*G01C 21/34* *(2006.01)*   *G01C 21/32* *(2006.01)*

(21) Application number: **10175871.2**

(22) Date of filing: **08.09.2010**

(54) **Vehicle navigation system**

Navigationssystem für ein Fahrzeug

Système de navigation de véhicule

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**14.03.2012  Bulletin 2012/11**

(60) Divisional application:
**11180568.5 / 2 431 711**

(73) Proprietor: **Harman Becker Automotive Systems
GmbH
76307 Karlsbad (DE)**

(72) Inventors:
• **Engelhardt, Hans-Peter
85716, Unterschleissheim (DE)**
• **Kluge, Sebastian
81669 München (DE)**

(74) Representative: **Bertsch, Florian Oliver
Kraus & Weisert
Patent- und Rechtsanwälte
Thomas-Wimmer-Ring 15
80539 München (DE)**

(56) References cited:
**JP-A- 2005 091 083    JP-A- 2010 052 652
JP-A- 2010 115 100    US-A1- 2004 049 339
US-A1- 2008 071 472    US-A1- 2009 222 198**

**Description**

Technical Field

The invention relates to a vehicle navigation system comprising a database storing map data and to a method of estimating an energy consumption of a vehicle for a link of a route.

Background

In the art, navigation systems are known which calculate a route from a present vehicle position to a predetermined destination using map data. Generally, these navigation systems calculate the fastest or the shortest route to the destination by using corresponding cost factors associated with the links of the route. With the increasing costs for energy, such as fuel, gas or electricity, it is desirable to reach the destination by a route which minimizes the energy consumption.

For the calculation of energy efficient route, static parameters, such as a speed category or a road size of a link corresponding to a road segment, and dynamic parameters, such as the driving behaviour of the driver of the vehicle may be used. Although the consideration of these parameters results in an already good approximation of the energy consumption for a route, it is still desirable to further improve the accuracy of estimating the energy consumption.

Furthermore, advanced driver assistance systems (ADAS) are known in the art which provide assistance to the driver of the vehicle. Such systems acquire information about the current driving situation or the vehicle's surroundings by means of sensors, the information being evaluated in order to control systems or components of the vehicle (e.g. such as in the case of ESP and ABS) or to provide a feedback to the driver. Modern assistance systems may combine such sensor information with static parameters obtained from a database of a navigation system. Such static parameters are generally stored in an ADAS attribute layer of the navigation database. The layer generally corresponds to the lowest map data layer, e.g. layer 13, the data being generally associated with the shape points of links provided at the lowest layer. The use of the ADAS layer data for navigation purposes is thus generally difficult. For retrieving the data, additional access to the ADAS layer is required, resulting in slow access times. As the data is associated with shape points, the use for a higher level route determination which uses higher layer links is difficult and very costly in terms of computing time and computing power. Accordingly, their use for route determination in a navigation system is generally infeasible or at least associated with a number of drawbacks.

US 2004/0049339 A1, which serves as basis for the preamble of the independent claims, describes an assistance system for selecting routes. Route parameters include radii of curvature and inclines. Continuously acquired route features that influence the journey are used to calculate as macroscopic route features a horizontal line trace, such as by calculating curviness or proportion of curves, or a vertical lines trace, such as by calculating a mean incline.

Accordingly, a need exists to improve the determination of an energy efficient route and to obviate at least some of the drawbacks mentioned above.

Summary

This need is met by the features of the independent claims. In the dependent claims, embodiments of the invention are described.

A first aspect of the invention relates to a vehicle navigation system having a database. The database stores map data comprising links corresponding to road segments and attributes associated with the links, wherein the map data associates at least some of the links with a curvature attribute. The curvature attribute for a link stores a mean absolute curvature attribute which is determined from a normalized sum or integral of absolute curvature values along the road segment corresponding to the link. The navigation system further comprises a processing unit adapted to estimate an energy consumption of the vehicle for a link taking into consideration the curvature attribute retrieved from the database for the link.

As the curvature attribute is directly associated with the link of the map data, it can be easily retrieved from the map database without the need to access different sections or layers of the database and to perform extensive recalculations. As the attribute stores a mean absolute curvature, it may reflect the curvature of the road segment corresponding to the link precisely even if the road segment is winding in both directions (e.g. meandering). Thus, even for links at higher layers which may correspond to a road segment of substantial length, a precise representation of curvature is possible. As curvature has an influence on the energy consumption, taking the curvature into account for estimating the energy consumption may result in a more precise estimation. Note that the energy consumption may also be estimated in form of a cost factor for the respective link.

The sum or the integral may be a weighted sum or a weighted integral in which the curvature values are weighted by a weighting factor. The weighting factor may depend on the respective curvature value. As an example, very high curvatures may result in an over-proportional increase in energy consumption, which can be accounted for by means of the weighting factor. The weighting factor is configured so as to consider the influence of the curvature on the energy consumption. The weighting factor may for example be determined from empirical or statistical data on energy consumption at certain curvatures.

The processing unit may be adapted to use a model which determines an additional energy consumption for the link caused by the curvatures along the corresponding road section from the absolute mean curvature attribute associated with the link. Such a model may be a simple model using only a curvature coefficient (cc), yet more complex models may be used which may for example consider vehicle specific properties, such as vehicle weight, or a velocity of the vehicle estimated for the link. The additional energy consumption caused by curvature may then be used to estimate the total energy consumption for the link.

The weighting factor for determining the mean absolute curvature may for example be fine-tuned such that the determined additional fuel consumption substantially corresponds to an actual additional fuel consumption for the link. This may be achieved by using reference data of fuel consumption for the link and the above model.

The map data may additionally associate at least some of the links with a rolling resistance attribute and a grade resistance attribute. The rolling resistance attribute for a link stores a value proportional to a sum or an integral over the cosine of the angles of elevation along the road segments, and the grade resistance attribute for a link stores a value proportional to a sum or an integral over the sine of the angles of elevation along the road segment. The processing unit may be adapted to estimate an energy consumption of the vehicle for a link taking into consideration at least one of the grade resistance attribute and the rolling resistance attribute retrieved from the database for the link.

Again, as these attributes are directly associated with the link, they can be retrieved efficiently in terms of the required computation time and power. As the rolling resistance attribute considers the elevation along the whole road segment, it can be used to precisely estimate an additional energy consumption due to incline even for longer road sections having uphill and downhill portions. Furthermore, by means of the rolling resistance attribute, the fact that the normal force to the road is decreased on a slope can be considered when estimating the energy consumption. A more precise determination of the energy consumption may thus be possible. Again, the energy consumption can be provided as a cost factor.

In an embodiment, the sum or integral are a weighted sum or a weighted integral, respectively, in which the cosine or sine are weighted by a weighting factor depending on the angle of elevation. A vehicle specific or a general weighting factor may be used. As an example, different types of weighting factors may be used for different classes of vehicles. For vehicles generating energy downhill, the weighting factor may be different than for vehicles requiring energy when travelling downhill.

In an example, the weighting factor for at least the grade resistance attribute may be such that the sine is weighted with a positive value if the angle of elevation is positive and with a negative value if the angle of elevation is negative. In consequence, both uphill and downhill sections of the link contribute additively, when estimating energy consumption from the grade resistance attribute, which is particularly useful for vehicles requiring energy when travelling downhill.

In another example, the weighting factor for at least the grade resistance attribute may be determined by the triangular function depending on the angle of elevation. The center of the function may for example be arranged at an angle of elevation of zero. Such a triangular function may be used for a vehicle generating energy downhill, such as a hybrid vehicle or an electric vehicle.

In a further example, the weighting factor for at least the grade resistance attribute may be a vehicle specific weighting factor depending on the properties of the vehicle and the angle of elevation. A different specific weighting factor may for example be used for determining the grade resistance attribute for different makes and models of vehicles. The database storing the attribute may thus be vehicle specific and may be provided for the particular make and model of vehicle. An additional fuel consumption due to the incline of the road may thus be estimated very precisely.

In an embodiment, the grade resistance attribute may comprise a first value proportional to a sum or an integral over the sine of the positive angles of elevation along the road segment and a second value proportional to a sum or an integral over the sine of the negative angles elevation along the road segment. By providing these two values, a differentiation between uphill and downhill sections of the road segment corresponding to the link may be possible. A generic database storing these values may thus be provided. A model used for estimating the energy consumption under consideration of the grade resistance attribute may then implement vehicle specific information. The model may for example weight the second value with a negative coefficient if the vehicle requires energy downhill, or with a positive coefficient if the vehicle generates energy downhill. A generic and precise estimation of energy consumption due to road incline may thus be possible.

The curvature attribute, the rolling resistance attribute and the grade resistance attribute may be stored in a route building block of the database. They may be stored in association with the links of one layer of the map data. They may then be extrapolated to other layers, which can be performed fast and efficiently. It is also conceivable to store the attributes for each layer in association with the links of the respective layer. Although requiring slightly more storage space, access times can be improved. Storing the attributes in the route building block in direct association with the links results in reduced access times and reduced computational effort.

It should be clear that the different attributes may be combined, so as to improve the precision of the estimation of the energy consumption. In particular, road segments leading up a steep hill, such as on mountain passes, often comprise steep inclines (or declines) and sharp curves. Considering the curvature attribute and the grade resistance attribute, and potentially the rolling resistance attribute for estimating the energy consumption for such a stretch of road improves the estimation significantly.

A further aspect of the invention provides a method of estimating energy consumption of a vehicle for a link of a route, the method comprising the steps of retrieving from a database comprising map data at least one link corresponding to a road segment and retrieving from the database a curvature attribute associated with the retrieved link. The curvature attribute for the link stores a mean absolute curvature which is determined from a normalized sum or integral of absolute curvature values along the road segment corresponding to the link. An energy consumption of the vehicle for the link is then estimated, the estimation taking into consideration the curvature attribute.

Additionally , at least one of a rolling resistance attribute and a grade resistance attribute associated with the retrieved link may be retrieved from the database. The rolling resistance attribute for a link stores a value proportional to a sum or an integral over the cosine of the angles of elevation along the road segment, and the grade resistance attribute for a link stores a value proportional to a sum or an integral over the sine of the angles of elevation along the road segment. The energy consumption of the vehicle for the link may then be estimated taking into consideration the retrieved rolling resistance attribute and/or the grade resistance attribute. It may certainly further take into consideration the curvature attribute, if retrieved.

In an embodiment, the methods may be performed by a vehicle navigation system which is configured as mentioned above. As such, the methods may further comprise any of the method steps mentioned above. In particular, the mean absolute curvature is determined by a weighted mean, and the integral or sum of the sine or cosine of the angles of elevation may be a weighted integral or sum, as outlined above.

With these methods, advantages similar to those outlined above may be achieved.

The invention further relates to a computer program product that can be loaded into the internal memory of a computing device, the product comprising software code portions for performing any of the methods mentioned above. Furthermore, the invention provides an electronically readable data carrier with stored electronically readable control information configured such that when using the data carrier in a computing device, the control information performs any of the methods mentioned above.

In a method of generating a database comprising map data for a navigation system, the method comprises the retrieving of curvature values giving information on the curvature along a road segment corresponding to a link of the map data, and determining a mean absolute curvature for the link by determining a normalized sum or integral of the absolute curvature values along the road segment corresponding to a link. The mean absolute curvature is then stored as a curvature attribute in association with the link.

Additionally , the database may be generated by retrieving angles of elevation giving information on the incline along a road segment corresponding to a link of the map data, and determining a first value proportional to a sum or an integral over the cosine of the angles of elevation along the road segment and a second value proportional to a sum or an integral over the sine of the angles of elevation along the road segment. The first value is then stored as a rolling resistance attribute in association with the link and the second value is stored as a grade resistance attribute in association with the link. A link of the map data in the database may thus be associated with one or any combination of curvature attribute, rolling resistance attribute and grade resistance attribute.

In an embodiment, the link may be split into link segments, e.g if the link has a predetermined size of predetermined properties, such as a steep elevation together with hich curvatures. For each of the link segments, the curvature, rolling resistance and/or drag resistance attributes may then be determined. The link segments can then be stored in said database in association with the attribute(s) determined for the respective link segment. Curvature and/or incline can thus be reflected more precisely by the attributes, as the attributes relate to the smaller link segments.

These attributes may be stored in a route building block of the database. The attributes stored in the database may be determined as outlined above. The attributes may for example be determined by weighted means, or a weighted sum or integral.

Furthermore, a data carrier may be provided comprising a database as outlined above.

It is to be understood that the features mentioned above and those here to be explained below can be used not only in the respective combinations indicated, but also in other combinations or in isolation, without leaving the scope of the present invention.

Brief description of the drawings

The foregoing and other features and advantages of the invention will become further apparent from the following detailed description of illustrated embodiments when read in conjunction with the accompanying drawings. In the drawings, like reference numerals refer to like elements.

Fig. 1 schematically illustrates a navigation system according to an embodiment.

Fig. 2 is a flow diagram illustrating the determination of cost factors for links of map data and the calculation of a route according to an embodiment.

Fig. 3 schematically illustrates a map database according to an embodiment.

Fig. 4 schematically illustrates the determination of a curvature attribute in accordance with an embodiment.

Fig. 5 schematically illustrates the determination of a rolling resistance attribute and a grade resistance attribute in accordance with an embodiment.

Fig. 6 shows a flow diagram illustrating a method according to an embodiment.

Detailed description

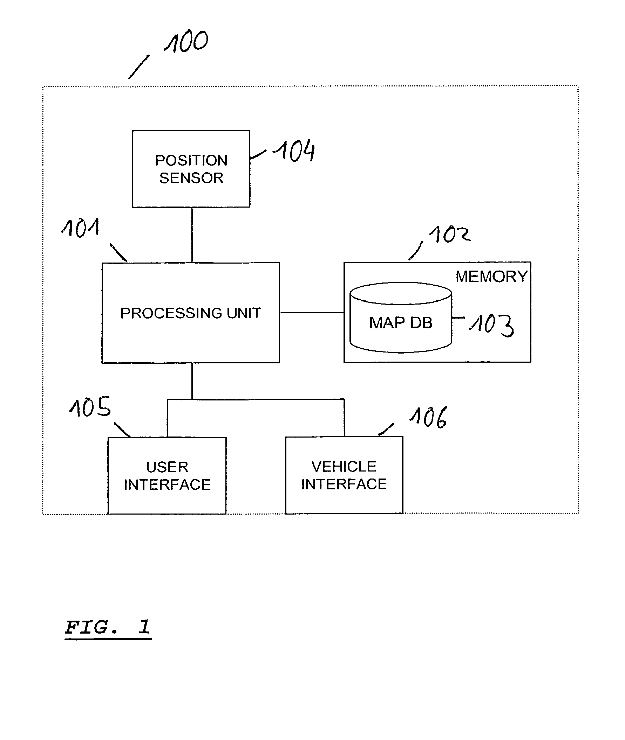

Fig. 1 schematically illustrates a vehicle navigation system 100 according to an embodiment. Navigation system 100 comprises a processing unit 101 controlling the operation of the navigation system, e.g. according to control instructions stored in memory 102. Processing unit 101 may comprise a central processing unit, for example in form of one or more microprocessors, digital signal processors or application-specific integrated circuits. Memory 102 may comprise all types of memory, such as random access memory, flash memory or a hard drive, but also removable memories such as a compact disk (CD), a DVD, a memory card or the like.

Processing unit 101 interfaces position sensor 104. Position sensor 104 is adapted to determine the current position of the vehicle in which navigation system 100 is located. Position sensor 104 may comprise a GPS (Global Positioning System) sensor, a Galileo sensor, a position sensor based on mobile telecommunication networks and the like.

User interface 105 may comprise a display and control elements, such as keys, buttons and turn/push knobs provided on a faceplate of the navigation device 100 or at other locations inside the vehicle. Processing unit 101 can further obtain information from other vehicle systems or current vehicle status information via vehicle interface 106. Vehicle interface 106 may for example comprise CAN (controller area network) or MOST (Media Oriented Systems Transport) interfaces. Via these interfaces, information on the driving behaviour of the driver of the vehicle, the current user of the vehicle, current operation conditions of the engine, current energy levels, e.g. status of batteries or filling level of fuel tank, and the like may be obtained by processing unit 101.

Memory 102 stores a database 103 comprising map data, which may be termed navigation database or map database. Database 103 may be stored on a memory such as a hard drive or a flash memory, or on a CD or DVD or on other data carrier. Map database 103 comprises a representation of a road network of a particular region. The representation can comprise nodes representing points on a map, such as cities or other settlements, intersections, highway entrances or exits, or points placed along roads. It further comprises links linking these nodes, with a link corresponding to a road segment between two nodes. The links may be provided for different layers essentially corresponding to different map scales. As an example, at a lower layer, a link may be provided between two neighbouring highway entrances, whereas at a higher layer a link may be provided between two adjacent settlements.

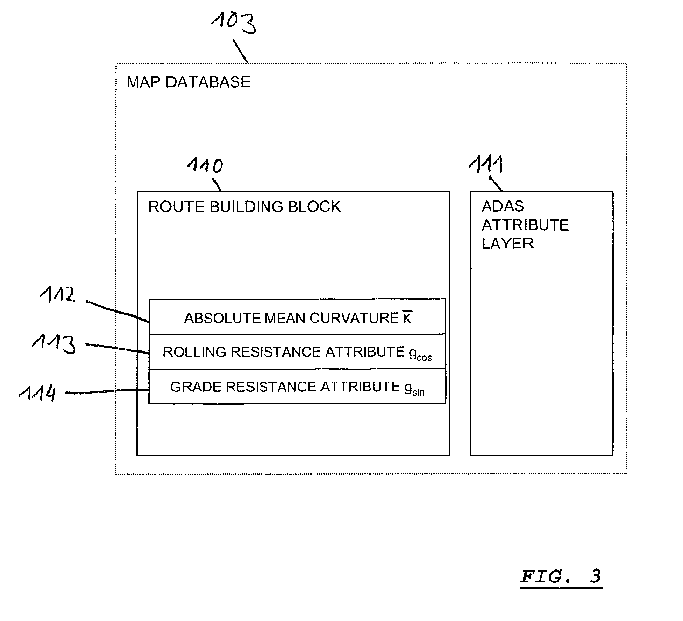

A possible implementation of map database 103 is schematically illustrated in Fig. 3. Map database 103 comprises a route building block 110 and an advanced driver assistance system (ADAS) attribute layer 111. Route building block 110 stores static parameters which are directly associated with a link of the map data of database 103. Static parameters stored in route building block 110 can for example include a functional road class, traffic control system parameters, such as traffic lights, right of way, speed restrictions and the like, a speed category or average speed for the link, and further static parameters. Whereas functional road class and average speed can be fixed route building block (RBB) attributes, the traffic control system information can be a flexible RBB attribute.

In the present embodiment a curvature attribute 112, a rolling resistance attribute 113 and a grade resistance attribute 114 are stored in addition to the further attributes in the route building block 110. Each of a plurality of links of the map data can be directly associated with a value of each of the attributes. If no attribute value is provided for a link, a default value can be used. It is also possible to store attribute values only for the links for which they are provided. When determining a cost factor or energy consumption for the link, an enquiry may then be made if the attribute is available for the link. If it is not available, the constribution corresponding to the attribute to the cost factor is neglected. Thus, a compact database can be obtained, as not empty or default attribute values need to be stored.

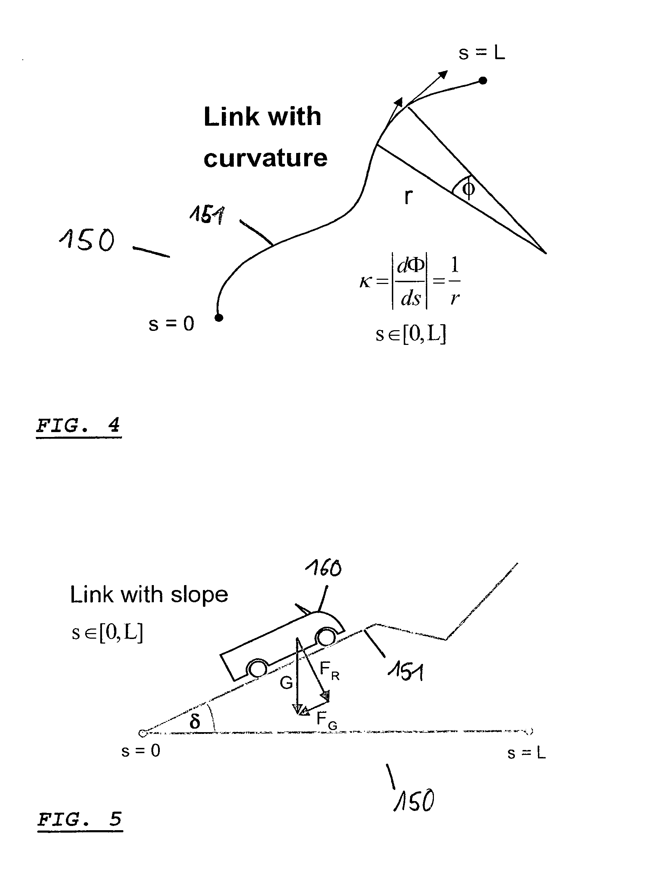

The curvature attribute 112 stores an absolute mean curvature $\overline{K}$ of the road segment corresponding to the link associated with the attribute. The mean absolute curvature for the road segment can be determined as illustrated in Fig. 4. Link 150 corresponds to a road segment 151 starting at point s=o and ending at point s=L, with L being the length of the road segment. Road segment 151 has different curvatures along its course, which can be defined at each point s along the course as

$$\kappa = \left|\frac{d\Phi}{ds}\right| = \frac{1}{r} \quad \text{with} \quad s \in [0, L] \qquad (1)$$

In order to determine a curvature value for the whole link 150, the absolute values of curvature $\overline{\kappa}$ can be integrated along the course of the road segment or, when provided in discrete form, can be summed up and normalized with the length of the road segment. The mean absolute curvature $\overline{\kappa}$ can accordingly be calculated as follows:

$$\overline{\kappa} = \frac{1}{L}\int_0^L |\kappa(s)| ds \qquad (2)$$

The integration can be performed numerically. In particular, the curvature values may be provided at discrete points along the road segment 151. Road segment 151 may for example be described with discrete points placed along or in proximity to the road segment, and for each of these points, a curvature value can be provided. The mean absolute curvature for the link 150 can then be calculated as a mean of the absolute curvatures provided at each discrete point.

The curvature values in the integral or sum are weighted when determining the mean absolute curvature $\overline{\kappa}$. When integrating, the weighting factor may be a continuous function which may itself depend on curvature. High curvatures can have a disproportional influence on the energy consumption and can accordingly be weighted more strongly than lower curvatures. If the mean absolute curvature is determined from discrete curvature values, the function can be used to determine corresponding discrete weighting factors, which may again weight higher curvatures more strongly than lower curvatures.

When determining a route from a starting point to a destination by means of processing unit 101, cost factors are generally provided for the links of the map and the route having the lowest total cost for reaching the destination is selected. The mean absolute curvature can be used for determining a cost factor for a link. It can further be used to estimate the energy required for travelling along the link. The additional required energy $\Delta B$ is generally proportional to the mean absolute curvature $\overline{\kappa}$. For determining the additional energy $\Delta B$ required due to the curvature, a simple model may be used which can be implemented by a curvature coefficient $c_c$ which is vehicle-specific and which can be stored in memory 102. The additional fuel consumption can then be determined as:

$$\Delta B = c_C \cdot \overline{\kappa} \qquad . \qquad (3)$$

More complex models may also be employed. A more complex model may for example consider the velocity of the vehicle estimated for the link, in dependence on which the additional energy consumption due to curvature may change. A further possibility is the consideration of a braking of the vehicle which may for example be necessary between curves in different directions, e.g. a curve to the left going over into a curve to the right. Such a braking can require additional energy, which can be considered either in the mean absolute curvature $\overline{\kappa}$, e.g. by a corresponding weighting factor, or in the model for determining the energy consumption for the link. Storing the mean absolute curvature in association with the link has the advantage that one value is provided for the link from which the additional energy consumption can be determined directly.

The route building block section 110 further stores a rolling resistance attribute 113 and a grade resistance attribute 114, the determination of which is explained in the following with respect to Fig. 5. Again, a link 150 starting at a node s=o and ending at a node s=L is considered. The corresponding road segment has uphill and downhill sections with corresponding different angles of elevation $\delta$ along its course. If the vehicle 160 is travelling along an uphill road section, the force $F_R$ normal to the road decreases, while at the same time the vehicle experiences a grade resistance $F_G$ as illustrated by the arrows. G is the gravitational force G=m·g, wherein m is the mass of the vehicle and g is the gravitational acceleration. The rolling resistance of the vehicle is generally proportional to the normal force $F_R$. Accordingly, an additional energy consumption $\Delta B$ due to the incline of the road can be described as

$$\Delta B \sim \int_{0}^{L} \left( F_R(s) + F_G(s) \right) ds \qquad (4)$$

With the rolling resistance coefficient $c_R$ and the grade resistance coefficient $c_G$ the additional fuel consumption can now be given as

$$\Delta B = \int_{0}^{L} \left( c_R \cdot f(\delta(s)) \cdot \cos(\delta(s)) + c_G \cdot g(\delta(s)) \cdot \sin(\delta(s)) \right) ds \qquad (5)$$

Whereas $c_R$ and $c_G$ are generally vehicle-dependent, the weighting factors $f(\delta(s))$ and $g(\delta(s))$ can be made vehicle-independent. Yet these weighting coefficients may also be chosen in accordance with the type of vehicle. The performance of the vehicle regarding energy consumption when travelling up or downhill may be modelled by means of these weighting coefficients. As can be seen from the drawing of Fig. 5, $\cos \delta$ corresponds to the ratio of the normal force to the gravitational force, whereas $\sin \delta$ corresponds to the ratio of the grade resistance to the gravitational force. The gravitational force which is vehicle-specific is accounted for in the vehicle-specific coefficients in the above equation.

From the above equation, a rolling resistance attribute

$$g_{\cos} = \int_{0}^{L} f(\delta(s)) \cdot \cos(\delta(s)) ds \qquad (6)$$

and a grade resistance attribute

$$g_{\sin} = \int_{0}^{L} g(\delta(s)) \cdot \sin(\delta(s)) ds \qquad (7)$$

are defined. These attributes 113 and 114 can be stored in map database 103 in association with the link 150 and can be made vehicle-independent.

If the weighting factor is chosen as a constant, e.g. $g(\delta(s))=1$, or is vehicle independent, then the following problem may arise. For a link for which the starting point and the end point are at the same elevation, yet for which sections inbetween are at a higher or lower elevation, the integral over $\sin(\delta)$ may account to zero. Yet the additional energy consumption is only zero if the vehicle regains all energy consumed during uphill driving when driving downhill, which is generally not the case. Some vehicles, such as vehicles equipped with conventional combustion engines, consume energy both when driving uphill and downhill, while other vehicle, such as hybrid vehicles or electric vehicles, may regain part of the consumed energy when travelling downhill.

With a constant or vehicle independent weighting factor, one possible solution is to provide two values in the grade resistance attribute, in the following termed $g_{\sin+}$ and $g_{\sin-}$. $g_{\sin+}$ is the sum or integral over the length of the link over the sine of all positive angles of elevations, while $g_{\sin-}$ is the sum or integral over the sine of all negative angles of elevation. Uphill and downhill sections of the link can thus be considered separately when estimating the additional energy consumption for the link on the basis of the grade resistance attribute. For a combustion engine powered vehicle, a larger $c_G$ may be used for determining $\Delta B$ from $g_{\sin+}$, while a negative and smaller coefficient $c_G$ may be used for determining $\Delta B$ from $g_{\sin-}$ (downhill sections), modelling fuel consumption both on up- and downhill sections. For hybrid or electric vehicles, the coefficient $c_G$ for the downhill sections $g_{\sin-}$ may be positive and smaller, corresponding to generated fraction of the energy.

Other ways of determining the grade resistance attribute $g_{\sin}$ are also conceivable. As an example, the weighting factor $g(\delta(s))$ may be a triangular function, which weights the sine term in accordance with the type of vehicle used. It is also possible to provide a vehicle-specific $g(\delta(s))$, which can thus precisely model the additional energy consumption or regained energy when driving up- or downhill, respectively. In such applications, map database 103 may be provided as a vehicle-specific map database.

Regarding the rolling resistance attribute, such problems generally do not occur, as the normal force is always normal to the road and does not change sign.

Again, it should be clear that the attribute values may be either calculated by an integration if the angle $\delta$ is provided as a continuous function of the distance s over the link, or as a sum if discrete values if $\delta$ is provided at discrete points s along the road segment. $\delta(s)$ may for example be the angle of elevation provided at particular discrete points along the road segment. When using a discrete sum, corresponding weighting factors can be determined by entering the discrete values for $\delta(s)$ into the weighting factor functions $g(\delta(s))$ and $f(\delta(s))$.

Map database 103 may be built as follows: for some of the links of the map data, curvature information and angle of elevation information may be available, e.g. in association with discrete or shape points, or may be provided by a data source (e.g. map data provider). For the links, for which such information is available, the corresponding attributes 112, 113 and 114 can be determined as outlined above. These attributes are then stored in direct association with corresponding link in the route building block 110 of the database 103. If the information for determining one or more of these attributes is not available for a link, then a default value can be stored for the respective attribute for the link in the database 103. The attributes can be stored as flexible attributes, enabling the use of default values. It is then not necessary to use an attribute placeholder, and storage space may be saved. Another possibility is to store the attributes as part of the link class for the respective link. The attributes are then present in every link element.

If a link corresponds to a road segment which has both steep incline and high curvatures, e.g. in both directions, the estimation of the energy consumption based on the attributes described above may not be as precise as desired. The database may then be compiled as follows. The link can be split up into link segments, each having a predetermined size. The link segments then have fewer curves or fewer up- or downhill section. For each of the link segments, the curvature, rolling resistance and/ or drag resistance attributes can then be determined, as described above with respect to the full links. The link segments are then stored in said database as individual link in association with the attribute(s) determined for the respective link segment. These new and smaller links together with their attributes can then be considered in the determination of a route or the estimation of an energy consumption.

Storing the attributes in the route building block 110 has the advantage that when the database is accessed for retrieving the link, the attributes can directly be retrieved together with the remaining attributes for the link. Accordingly, the ADAS attribute layer 111 does not need to be separately accessed, resulting in an increased processing speed. In particular, it is not necessary to extract road segment properties stored in association with shape points in the ADAS attribute layer 111 and perform a further calculation.

The attributes 112 to 114 can be stored in association with the links of the lowest layer of the map data, e.g. layer 13. The attributes can then be easily abstracted from lower layers to higher layers with the following equation:

$$ x_{higher\,layer} = \frac{\sum_{n=1}^{M} (x_n \cdot L_n)_{lower\,layer}}{L_{higher\,layer}} \qquad (8) $$

The number M is the number of lower layer links that are summarized into the corresponding higher layer link. $L_{higher/lower\,layer}$ is the link length of the higher/lower layer link. $x_n$ is the respective attribute:

$$ x \in \{\overline{K},\ g_{cos},\ g_{sin}\} \qquad (9) $$

or, if the grade resistance attribute comprises values for positive and negative angles of elevation:

$$ x \in \{\overline{K},\ g_{cos},\ g_{sin+},\ g_{sin-}\} \qquad (10) $$

It is thus straightforward to determine the attribute for a higher layer link. As higher layer links quite frequently correspond to road segments having a number of curves in both directions and having up- and downhill sections, using the attributes $x_n$ for estimating a energy consumption for the link is particular advantageous.

Another possibility is to store the attributes $x_n$ for the links of each layer. Although requiring more storage space, this offers the possibility that an abstraction of the attributes from lower to higher layers may not be necessary.

Processing unit 101 of vehicle navigation system 100 may now retrieve the attributes mentioned above from the map database 103 and may use these attributes for different purposes. First, it is possible to improve the estimation of the energy consumption for a particular link. This may be used for determining the total energy consumption required for travelling a particular route, or for estimating the remaining distance that can be travelled with the energy reserves available in the vehicle. For this purpose, processing unit 101 may acquire via vehicle interface 106 the current charging status of batteries of the vehicle or the current fuel level in the tank of a vehicle.

Processing unit 101 may also estimate the energy consumption for the link in order to determine a cost factor for the link. Using these cost factors, processing unit 101 can determine a route from a starting point to a destination minimizing the required energy consumption. Route determination as such may occur according to any method known in the art, e.g. using an A* or Dijkstra search algorithm.

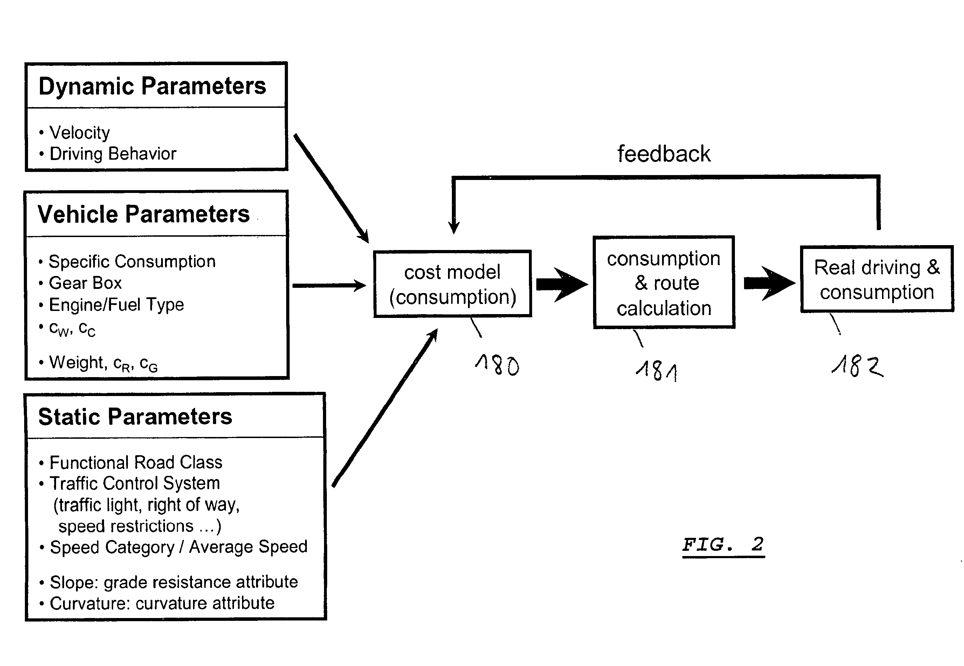

Route determination is schematically illustrated in Fig. 2. In the example of Fig. 2, a cost model based on energy consumption is used (block 180). In the cost model, dynamic parameters, such as the vehicle velocity and the driving behaviour, vehicle parameters, such as the specific fuel consumption, the gear ratios used, the engine type and fuel type, coefficients such as the drag coefficient cw, the above mentioned curvature coefficient $c_c$ and parameters depending on the vehicle weight, such as the rolling resistance coefficient $c_R$ and the grade resistance coefficient $c_G$ can be used. Furthermore, the static parameters provided by the map database 103 are used for determining the cost for a particular link with the cost model. Such static parameters comprise the functional route class, traffic control system related parameters such as traffic lights, right of way, speech restrictions and the like, speed category and average speed parameters for the link. Furthermore, the grade resistance attribute and the curvature attribute are used in the cost model for estimating the energy consumption/cost of the link.

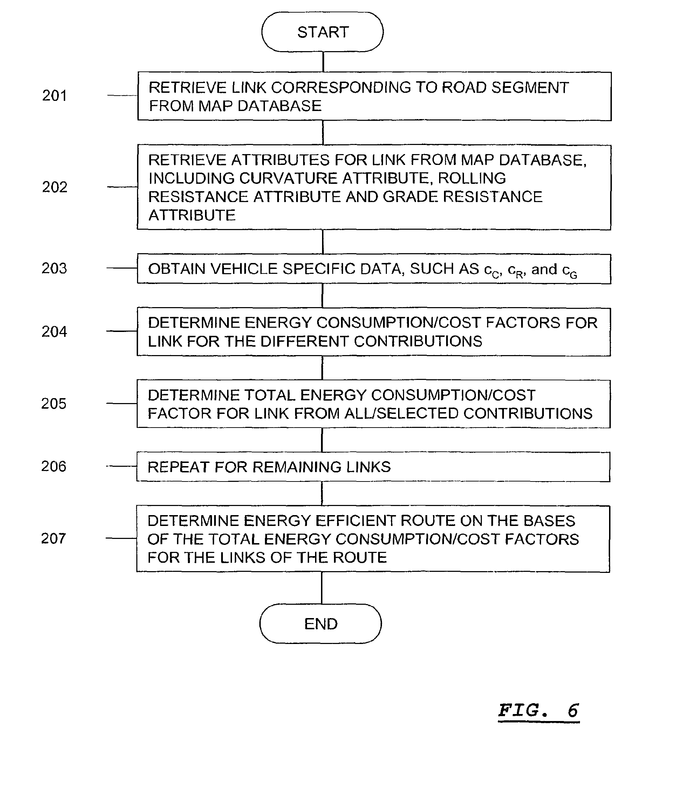

This is illustrated in Fig. 6. In step 201 the link corresponding to a road segment is retrieved from the map database. In step 202, the attributes for the link are retrieved from the map database, including the curvature attribute, the rolling resistance attribute and the grade resistance attribute. Furthermore, the vehicle parameters $c_C$ ,$c_R$ and $c_G$ are obtained in step 203. These may also be stored in memory 102, or may be obtained from other vehicle systems, e.g. via vehicle interface 106. For each of the different contributions (slope, curvature, rolling resistance, aerodynamic drag and the like), an energy consumption (or cost factor) is determined for the link in step 204. In some instances, only the most important contributions may be considered, e.g. grade resistance when travelling up a hill, while in other implementations, all contributions are considered. In step 205, the total energy consumption or cost factor is determined for the link from all contributions or from the selected contributions.

This is repeated for the remaining links, so that for all links important for route determination, total cost factors are available. It should be clear that for some links, not all attributes are provided in the map database and that accordingly, the contributions are either neglected or default values are used. Using the links associated with the total cost factors, an energy efficient route can then be determined in step 207.

Turning back to Fig. 2, the energy consumption and route calculation are illustrated in functional block 181. When the driver is travelling along the determined energy efficient route, the navigation system can monitor the real driving conditions energy and consumption (functional block 182). This can be compared with the predicted energy consumption, and feedback can be provided for the cost model. As an example, weighting factors of the cost model may be adjusted. On the other hand, it is also possible to adjust vehicle parameters, such as the specific consumption, or dynamic parameters, such as the driving behaviour.

With these measures, energy consumption for particular links can be precisely calculated, and accordingly, the determination of a energy efficient route can be improved. It should be clear that it is not necessary to calculate the energy consumption in actual physical terms, e.g. liters of fuel for a particular link, or ampere hours of electrical energy for a particular link, but it is sufficient to provide a value proportional and representative of the energy consumption, which can be used as a cost factor.

It should be clear that the methods illustrated in Fig. 2 and Fig. 6 can be performed by the vehicle navigation system 100 of Fig. 1.

With the vehicle navigation system, route determination can be accelerated, as the attributes are directly associated with the respective links and no additional access to the ADAS layer is needed. The attributes have a simple structure and can be stored without requiring much storage space. Accordingly, a fast and precise determination of an energy efficient route or a precise prediction of energy consumption are enabled.

**Claims**

1.  A vehicle navigation system (100), comprising:

    - a database (103) storing map data comprising links (150) corresponding to road segments (151) and attributes associated with said links, the map data associating at least some of said links (150) with a curvature attribute (112), the curvature attribute for a link storing a mean absolute curvature ($\overline{\kappa}$) which is determined from a normalized sum or integral of absolute curvature values along the road segment (151) corresponding to the link (150),
- a processing unit (101) adapted to estimate an energy consumption of a vehicle for a link (150) taking into consideration the curvature attribute (112) retrieved from the database for the link (150),

**characterized in that**
the sum or the integral are a weighted sum or a weighted integral in which the curvature values are weighted by a weighting factor, preferably in dependence on the respective curvature value, the weighting factor being configured so as to consider the influence of the curvature on energy consumption.

2. The vehicle navigation system according to claim 1, wherein the processing unit (101) is adapted to use a model which determines an additional energy consumption ($\Delta B$) for the link (150) caused by the curvatures along the corresponding road segment (150) from the absolute mean curvature attribute (112) associated with the link.

3. The vehicle navigation system according to claim 1 or claim 2, wherein

- the map data associates at least some of said links (150) with a rolling resistance attribute (113) and a grade resistance attribute (114), the rolling resistance attribute (113) for a link (150) storing a value (gcos) proportional to a sum or an integral over the cosine of the angles of elevation ($\delta$) along the road segment (151), the grade resistance attribute (114) for a link storing a value (gsin) proportional to a sum or an integral over the sine of the angles of elevation ($\delta$) along the road segment (151), and
- the processing unit (101) is adapted to estimate an energy consumption of the vehicle (160) for a link (150) taking into consideration at least one of the rolling resistance attribute (113) and the grade resistance attribute (114) retrieved from the database for the link (150).

4. The vehicle navigation system according to claim 3, wherein the grade resistance attribute (114) comprises a first value (gsin+) proportional to a sum or an integral over the sine of the positive angles of elevation along the road segment and a second value (gsin- ) proportional to a sum or an integral over the sine of the negative angles of elevation along the road segment.

5. The vehicle navigation system according to any of the preceding claims, wherein the attribute is stored in a route building block (110) of the database (103).

6. A method of estimating an energy consumption of a vehicle for a link of a route, the method comprising the steps of:

- retrieving from a database (103) comprising map data at least one link (150) corresponding to a road segment;
- retrieving from said database (103) a curvature attribute (112) associated with the retrieved link, the curvature attribute for the link storing a mean absolute curvature ($\overline{\kappa}$) which is determined from a normalized sum or integral of absolute curvature values along the road segment corresponding to the link; and
- estimating an energy consumption of the vehicle for the link (150) taking into consideration the retrieved curvature attribute (112),

**characterized in that**
the sum or the integral are a weighted sum or a weighted integral in which the curvature values are weighted by a weighting factor, preferably in dependence on the respective curvature value, the weighting factor being configured so as to consider the influence of the curvature on energy consumption.

7. The method according to claim 6, wherein the method is performed by a vehicle navigation system configured according to any of claims 1-5.

8. A computer program product that can be loaded into the internal memory of a computing device, said product comprising software code portions for performing the method of claim 6 or claim 7 when the product is executed.

9. Electronically readable data carrier with stored electronically readable control information configured such that when using the data carrier in a computing device, the control information performs the method of claim 6 or claim 7.

**Patentansprüche**

1. Fahrzeugnavigationssystem (100), das Folgendes umfasst:

   - eine Datenbank (103), die Kartendaten mit Abschnitten (150), die Straßensegmenten (151) entsprechen, und den Abschnitten zugeordnete Attribute speichert, wobei die Kartendaten mindestens einige der Abschnitte (150) einem Krümmungsattribut (112) zuordnen, wobei das Krümmungsattribut für einen Abschnitt eine mittlere Absolutkrümmung ($\kappa$) speichert, die aus einer normalisierten Summe oder einem Integral absoluter Krümmungswerte entlang des Straßensegments (151) ermittelt wird, das dem Abschnitt (150) entspricht,
   - eine Rechnereinheit (101), die so angepasst ist, dass sie einen Energieverbrauch eines Fahrzeugs für einen Abschnitt (150) schätzt, wobei das Krümmungsattribut (112) berücksichtigt wird, das für den Abschnitt (150) aus der Datenbank abgerufen wurde,

   **dadurch gekennzeichnet, dass**
   die Summe oder das Integral eine gewichtete Summe oder ein gewichtetes Integral ist, in der/dem die Krümmungswerte mit einem Gewichtungsfaktor gewichtet werden, vorzugsweise in Abhängigkeit von dem jeweiligen Krümmungswert, wobei der Gewichtungsfaktor so konfiguriert ist, dass er den Einfluss der Krümmung auf den Energieverbrauch berücksichtigt.

2. Fahrzeugnavigationssystem nach Anspruch 1, wobei die Rechnereinheit (101) so angepasst ist, dass sie ein Modell verwendet, das aus dem dem Abschnitt zugeordneten absoluten mittleren Krümmungsattribut (112) einen zusätzlichen Energieverbrauch ($\Delta B$) für den Abschnitt (150) ermittelt, der durch die Krümmungen entlang des entsprechenden Straßensegments (150) verursacht wird.

3. Fahrzeugnavigationssystem nach Anspruch 1 oder 2, wobei

   - die Kartendaten mindestens einige der Abschnitte (150) einem Rollwiderstandsattribut (113) und einem Steigungswiderstandsattribut (114) zuordnen, wobei das Rollwiderstandsattribut (113) für einen Abschnitt (150) einen Wert (gcos) proportional zu einer Summe oder einem Integral über den Kosinus der Anstiegswinkel ($\delta$) entlang des Straßensegments (151) speichert, das Steigungswiderstandsattribut (114) für einen Abschnitt einen Wert (gsin) proportional zu einer Summe oder einem Integral über den Sinus der Anstiegswinkel ($\delta$) entlang des Straßensegments (151) speichert, und
   - die Rechnereinheit (101) so angepasst ist, dass sie einen Energieverbrauch eines Fahrzeugs (160) für einen Abschnitt (150) schätzt, wobei mindestens einer der Faktoren Rollwiderstandsattribut (113) und Steigungswiderstandsattribut (114) berücksichtigt wird, die für den Abschnitt (150) aus der Datenbank abgerufen wurden.

4. Fahrzeugnavigationssystem nach Anspruch 3, wobei das Steigungswiderstandsattribut (114) einen ersten Wert (gsin+ ) proportional zu einer Summe oder einem Integral über den Sinus der positiven Anstiegswinkel entlang des Straßensegments und einen zweiten Wert (gsin- ) proportional zu einer Summe oder einem Integral über den Sinus der negativen Anstiegswinkel entlang des Straßensegments umfasst.

5. Fahrzeugnavigationssystem nach einem der vorhergehenden Ansprüche, wobei das Attribut in einem Routenbaustein (110) der Datenbank (103) gespeichert wird.

6. Verfahren zur Schätzung eines Energieverbrauchs eines Fahrzeugs für einen Routenabschnitt, wobei das Verfahren die folgenden Schritte aufweist:

   - Abrufen aus einer Datenbank (103), die Kartendaten mindestens eines Abschnitts (150) umfasst, der einem Straßensegment entspricht;
   - Abrufen eines Krümmungsattributs (112) aus der Datenbank (103), das dem abgerufenen Abschnitt zugeordnet ist, wobei das Krümmungsattribut für den Abschnitt eine mittlere Absolutkrümmung ($\kappa$) speichert, die aus einer normalisierten Summe oder einem Integral absoluter Krümmungswerte entlang des Straßensegments ermittelt wird, das dem Abschnitt (150) entspricht; und
   - Schätzen eines Energieverbrauchs des Fahrzeugs für den Abschnitt (150), wobei das abgerufene Krümmungsattribut (112) berücksichtigt wird,

   **dadurch gekennzeichnet, dass**
   die Summe oder das Integral eine gewichtete Summe oder ein gewichtetes Integral ist, in der/dem die Krümmungswerte mit einem Gewichtungsfaktor gewichtet werden, vorzugsweise in Abhängigkeit von dem jeweiligen Krümmungswert, wobei der Gewichtungsfaktor so konfiguriert ist, dass er den Einfluss der Krümmung auf den Energieverbrauch berücksichtigt.

7. Verfahren nach Anspruch 6, worin das Verfahren von einem Fahrzeugnavigationssystem durchgeführt wird, das nach einem der Ansprüche 1-5 konfiguriert ist.

8. Computerprogrammprodukt, das auf den internen Speicher einer Rechnervorrichtung geladen werden kann, wobei das Produkt Softwarecode-Teile umfasst, um das Verfahren nach Anspruch 6 oder Anspruch 7 durchzuführen, wenn das Produkt ausgeführt wird.

9. Elektronisch lesbarer Datenträger mit gespeicherten elektronisch lesbaren Steuerungsinformationen, der so konfiguriert ist, dass die Steuerungsinformation das Verfahren nach Anspruch 6 oder Anspruch 7 ausführt, wenn der Datenträger in einer Rechnervorrichtung verwendet wird.

## Revendications

1. Système de navigation pour véhicule (100) comprenant :

   - une base de données (103) pour stockage de données cartographiques comprenant des liens (150) qui correspondent à des segments de route (151) et à des attributs associés auxdits liens, les données cartographiques associant au moins certains desdits liens (150) à un attribut de courbure (112), l'attribut de courbure pour un lien stockant une courbure moyenne absolue ($\kappa$) qui est calculée à partir d'une somme normalisée ou intégrale des valeurs absolues de courbure le long du segment de route (151) correspondant au lien (150),
   - une unité centrale (101) conçue pour évaluer une consommation d'énergie d'un véhicule pour un lien (150) prenant en compte l'attribut de courbure (112) extrait de la base de données du lien (150), **caractérisée en ce que**

   la somme ou l'intégrale sont une somme pondérée ou une intégrale pondérée dans lesquelles les valeurs de courbure sont pondérées par un facteur de pondération, de préférence en fonction de la valeur de courbure respective, le facteur de pondération étant configuré de façon à tenir compte de l'influence de la courbure sur la consommation d'énergie.

2. Système de navigation pour véhicule selon la revendication 1, dans lequel l'unité centrale (101) est conçue pour utiliser un modèle qui détermine une consommation d'énergie supplémentaire ($\Delta B$) pour le lien (150) causé par les courbures le long du segment de route correspondant (150) à partir de l'attribut de courbure moyenne absolue (112) associé au lien.

3. Système de navigation pour véhicule selon la revendication 1 ou la revendication 2, dans lequel

   - les données cartographiques associent au moins certains desdits liens (150) à un attribut de résistance au roulement (113) et à un attribut de résistance due aux rampes (114), l'attribut de résistance au roulement (113) pour un lien (150) stockant une valeur (gcos) proportionnelle à une somme ou à une intégrale sur le sinus des angles d'élévation ($\delta$) le long du segment de route (151), l'attribut de résistance due aux rampes (114) pour un lien stockant une valeur (gsin) proportionnelle à une somme ou une intégrale sur le sinus des angles d'élévation ($\delta$) le long du segment de route (151), et
   - l'unité centrale (101) est conçue pour évaluer une consommation d'énergie du véhicule (160) pour un lien (150) en tenant compte d'au moins l'un de l'attribut de résistance au roulement (113) et de l'attribut de résistance due aux rampes (114) extrait de la base de données du lien (150).

4. Système de navigation pour véhicule selon la revendication 3, dans lequel l'attribut de résistance due aux rampes (114) comprend une première valeur (gsin+) proportionnelle à une somme ou à une intégrale sur le sinus des angles positifs d'élévation le long du segment de route et une seconde valeur (gsin-) proportionnelle à une somme ou à une intégrale sur le sinus des angles négatifs d'élévation le long du segment de route.

5. Système de navigation pour véhicule selon l'une quelconque des revendications précédentes, dans lequel l'attribut est stocké dans un bloc de construction d'itinéraire (110) de la base de données (103).

**6.** Procédé d'évaluation d'une consommation d'énergie d'un véhicule pour un lien d'un itinéraire, le procédé comprenant les étapes consistant à :

- extraire d'une base de données (103) comprenant des données cartographiques au moins un lien (150) correspondant à un segment de route ;
- extraire de ladite base de données (103) un attribut de courbure (112) associé au lien extrait, l'attribut de courbure du lien stockant une courbure moyenne absolue ($\kappa$) qui est calculée à partir d'une somme normalisée ou d'une intégrale des valeurs absolues de courbure le long du segment de route correspondant au lien ; et
- extraire de ladite base de données (103) un attribut de courbure (112) associé au lien extrait, l'attribut de courbure du lien stockant une courbure moyenne absolue ($\kappa$) qui est calculée à partir d'une somme normalisée ou intégrale des valeurs absolues de courbure le long du segment de route correspondant au lien ; et
- évaluer la consommation d'énergie du véhicule pour le lien (150) en tenant compte de l'attribut de courbure extrait (112),

**caractérisé en ce que**
la somme ou l'intégrale sont une somme pondérée ou une intégrale pondérée dans lesquelles les valeurs de courbure sont pondérées par un facteur de pondération, de préférence en fonction de la valeur de courbure respective, le facteur de pondération étant configuré de façon à tenir compte de l'influence de la courbure sur la consommation d'énergie.

**7.** Procédé selon la revendication 6, dans lequel le procédé est exécuté par un système de navigation pour véhicule conçu selon l'une quelconque des revendications de 1 à 5.

**8.** Produit de programme informatique pouvant être chargé dans la mémoire interne d'un périphérique informatique, ledit produit comprenant des parties de code logiciel pour l'exécution du procédé selon la revendication 6 ou la revendication 7 lorsque le produit se réalise.

**9.** Support de données lisibles électroniquement stockant des informations de commande lisibles électroniquement, configuré de telle sorte que lors de l'utilisation du support de données dans un périphérique informatique, les informations de commande exécutent le procédé selon la revendication 6 ou la revendication 7.

*100*

POSITION
SENSOR *104*

*101*

PROCESSING UNIT

MEMORY *102*

MAP DB *103*

*105*

USER
INTERFACE

VEHICLE
INTERFACE *106*

FIG. 1

**Dynamic Parameters**

• Velocity
• Driving Behavior

**Vehicle Parameters**

• Specific Consumption
• Gear Box
• Engine/Fuel Type
• $c_W$, $c_C$
• Weight, $c_R$, $c_G$

**Static Parameters**

• Functional Road Class
• Traffic Control System
  (traffic light, right of way,
  speed restrictions ....)
• Speed Category / Average Speed

• Slope: grade resistance attribute
• Curvature: curvature attribute

cost model
(consumption) — 180

consumption
& route
calculation — 181

Real driving &
consumption — 182

feedback

*FIG. 2*

15

*103*

MAP DATABASE

*110*

ROUTE BUILDING BLOCK

*112*

ABSOLUTE MEAN CURVATURE $\overline{\kappa}$

*113*

ROLLING RESISTANCE ATTRIBUTE $g_{cos}$

*114*

GRADE RESISTANCE ATTRIBUTE $g_{sin}$

*111*

ADAS ATTRIBUTE LAYER

*FIG. 3*

**Link with curvature**

150

151

s = L

r

$\phi$

s = 0

$$\kappa = \left| \frac{d\Phi}{ds} \right| = \frac{1}{r}$$

$$s \in [0, L]$$

*FIG. 4*

Link with slope

$s \in [0, L]$

160

151

$F_R$

G

$F_G$

$\delta$

s = 0

s = L

150

*FIG. 5*

START

201 — RETRIEVE LINK CORRESPONDING TO ROAD SEGMENT FROM MAP DATABASE

202 — RETRIEVE ATTRIBUTES FOR LINK FROM MAP DATABASE, INCLUDING CURVATURE ATTRIBUTE, ROLLING RESISTANCE ATTRIBUTE AND GRADE RESISTANCE ATTRIBUTE

203 — OBTAIN VEHICLE SPECIFIC DATA, SUCH AS $c_C$, $c_R$, and $c_G$

204 — DETERMINE ENERGY CONSUMPTION/COST FACTORS FOR LINK FOR THE DIFFERENT CONTRIBUTIONS

205 — DETERMINE TOTAL ENERGY CONSUMPTION/COST FACTOR FOR LINK FROM ALL/SELECTED CONTRIBUTIONS

206 — REPEAT FOR REMAINING LINKS

207 — DETERMINE ENERGY EFFICIENT ROUTE ON THE BASES OF THE TOTAL ENERGY CONSUMPTION/COST FACTORS FOR THE LINKS OF THE ROUTE

END

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040049339 A1